# EUROPEAN PATENT SPECIFICATION

(11) **EP 1 883 264 B1**
(45) Date of publication and mention of the grant of the patent: **11.05.2011**
(21) Application number: 07013710.4
(22) Date of filing: 12.07.2007
(51) Int. Cl.: H04W 36/30

(54) **Mobile communication system, node device, user equipment and measurement report suppressing method therefor**
Mobiles Kommunikationssystem, Knotenvorrichtung, Benutzervorrichtung und Verfahren zur Unterdrückung von Messprotokollen dafür
Système de communication mobile, dispositif de noeud, équipement utilisateur et leur procédé pour la suppression du rapport de mesure

(30) Priority: 26.07.2006 JP 2006202659
(43) Date of publication of application: 30.01.2008
(73) Proprietor: NEC Corporation, Minato-ku Tokyo (JP)
(72) Inventor: Itaba, Naoto, Minato-ku, Tokyo (JP)
(74) Representative: Glawe, Delfs, Moll

(56) References cited:
- "3rd Generation Partnership Project; Technical Specification Group Radio Access Network; Evolved Universal Terrestrial Radio Access (E-UTRA) and Evolved Universal Terrestrial Radio Access Network (E-UTRAN); Radio interface protocol aspects (3GPP TR 25.813 v1.0.1, Release 7)" 3GPP, June 2006 (2006-06), pages 1-39, XP002457757 Retrieved from the Internet: URL:www.3gpp.org>
- QUALCOMM: "Fast cell selection for E-UTRAN (3GPP TSG-RAN WG3 Meeting #48-bis)" 3GPP, 11 October 2005 (2005-10-11), - 14 October 2005 (2005-10-14) pages 1-4, XP002457758 Retrieved from the Internet: URL:www.3gpp.org>
- "UNIVERSAL MOBILE TELECOMMUNICATIONS SYSTEM (UMTS); FEASIBILITY STUDY FOR EVOLVED UNIVERSAL TERRESTRIAL RADIO ACCESS (UTRA) AND UNIVERSAL TERRESTRIAL RADIO ACCESS NETWORK (UTRAN) (3GPP TR 25.912 VERSION 7.0.0 RELEASE 7)" 3GPP, June 2006 (2006-06), pages 1-57, XP002457759 ETSI standards, SOPHIA-ANTIPO, FR Retrieved from the Internet: URL:www.3gpp.org>

## Description

### BACKGROUND OF THE INVENTION

### Field of the Invention

The present invention relates to a mobile communication system, a node device, user equipment and a measurement report suppressing method therefor, and more specifically to a handover scheme in the UTRAN (Universal Terrestrial Radio Access Network) that is formed by a node in which a Node B (radio base station) and an RNC (Radio Network controller) are integrated together.

### Description of the Related Art

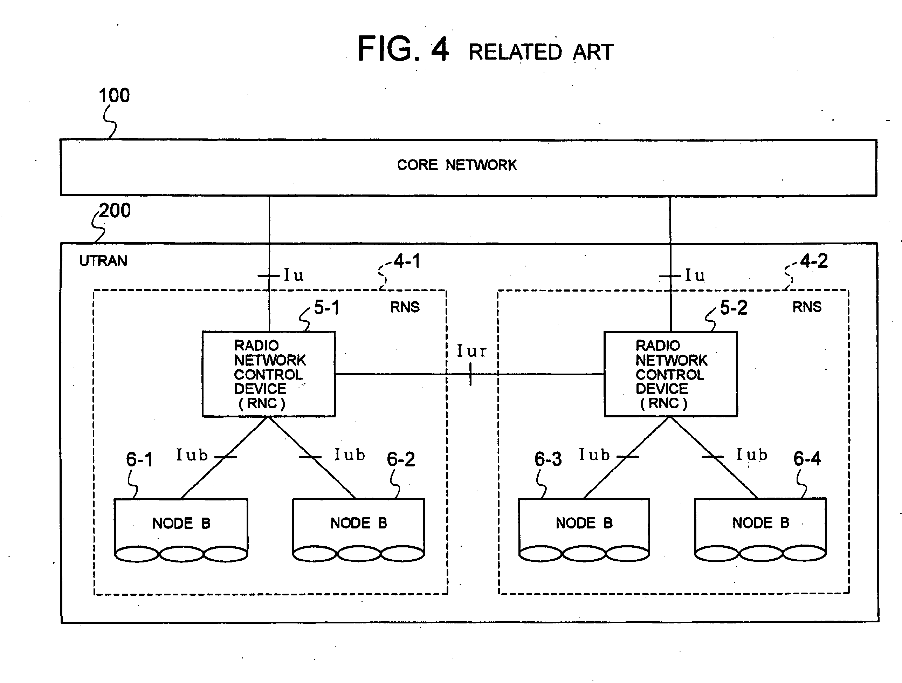

The above-mentioned UTRAN includes RNCs 5-1, 5-2 and Nodes B6-1 to 6-4 as shown in FIG. 4. The RNCs 5-1, 5-2 are connected with a Core Network 100 via an interface called Iu and connected with Nodes B6-1 to 6-4 via an interface called Iub. Both of the RNC 5-1, 5-2 and the Nodes B6-1 to 6-4 are collectively called RNSs (Radio Network Subsystem) 4-1, 4-2.

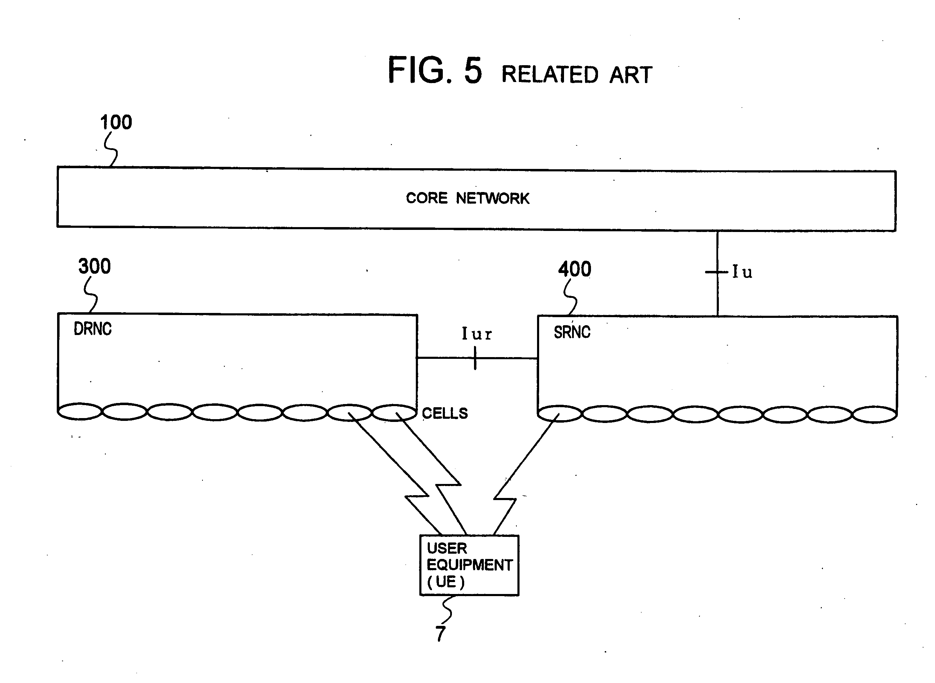

The RNC 5-1, 5-2 for controlling user equipment are called SRNC (Serving Radio Network controller) 400. When the user equipment also keeps connection with an RNC other than the SRNC, a control signal from the SRNC arrives at the user equipment through the other RNC via an interface called Iur as shown in FIG. 5. The other RNC here is called the DRNC (Drift Radio Network controller) 300.

It has been examined about development of the UTRAN [UTRAN LTE (Long Term Evolution)] for the purpose of keeping the UTRAN competitive for the development of the other radio communication technique such as a radio LAN (Local Area Network) as 3GPP (3^{rd} Generation Partnership Project) is standardized.

For example, see Non Patent Document 1 ("Requirement for Evolved UTRA (E-UTRA) and Evolved UTRAN (E-UTRAN)" [3GPP TR25.913 v7.3.0(2006-03)], Non Patent Document 2 ("Physical Layer Aspects for Evolved UTRA" [3GPP TR25.814 v1.4.0 (2006-05)]), Non Patent Document 3 ("3GPP System Architecture Evolution: Report on Technical Options and Conclusions" [3GPP TR23.882 draft v1.1.0 (2006-04)], and Non Patent Document 4 ("Evolved Universal Terrestrial Radio Access (E-UTRA) and Evolved Universal Terrestrial Radio Access Network (E-UTRAN)" [3GPP TR25.813 v0.9.1 (2006-05)].

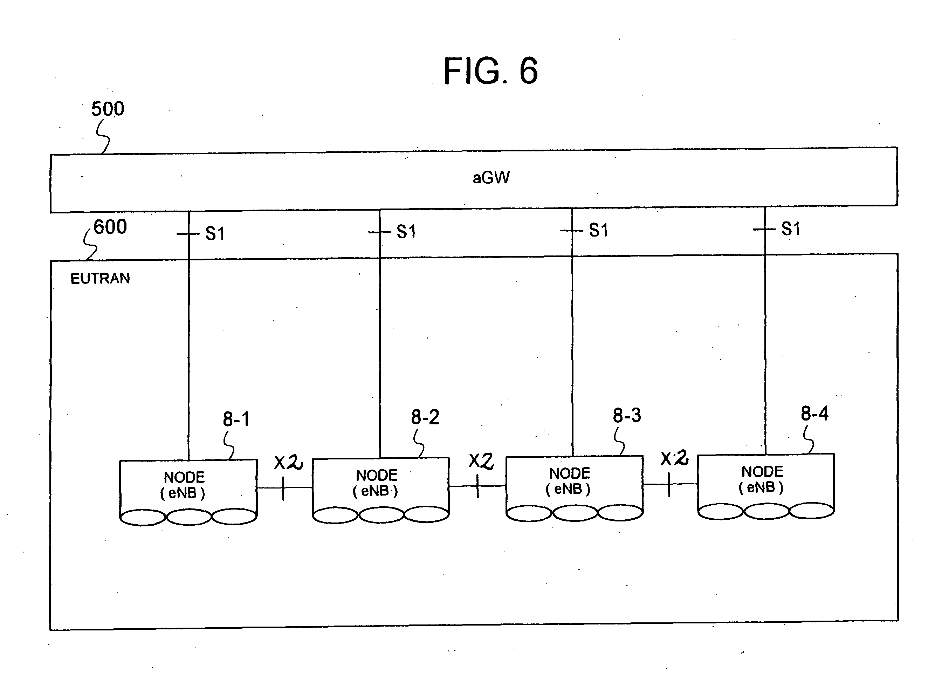

For the UTRAN LTE, it has been proposed to form the UTRAN by the Nodes (eNB) 8-1 to 8-4, in which the RNC and the Node B are integrated as shown in FIG. 6. In the proposal, the UTRAN in the LTE is defined as the EUTRAN (Evolved UTRAN) 600 and a core network in the LTE is defined as aGW (access gateway) 500, an interface between the Node (eNB) 8-1 to 8-4 and aGW500 is defined as S1 and an interface between the Nodes (eNB) 8-1 to 8-4 is defined as X2.

With the RNC and the Node B integrated, the number of nodes forming the EUTRAN 600 is less than in the case of the UTRAN 200 shown in FIG. 4. With the less number of Nodes, a delay in setting connection among the user equipment/Node (eNB) / aGW to perform communication decreases.

That is because that setting of the connection among the RNC/Node B in the UTRAN 200 shown in FIG. 4 is eliminated in the EUTRAN 600 shown in FIG. 6. The less number of Nodes for forming the EUTRAN 600 means the less number of Nodes for processing the user packet. A delay in transferring the user packet is also reduced in the EUTRAN 600 shown in FIG. 6 in comparison with the case of the UTRAN 200 shown in FIG. 4.

In addition to improvement of the configuration of the UTRAN, it has also been examined to simplify the function to be realized in the EUTRAN 600 shown in FIG. 6 in the LTE. As an example, it has been examined that user equipment receives electrical wave only from a cell, in which the user equipment is placed, without implementing soft handover, in which user equipment receives electrical wave from a plurality of Cells at the same time.

In the LTE, the soft handover is not performed and user equipment always receives data only in a cell. Therefore, it is required to accommodate user equipment in the cell with the best environment for the user equipment among cells, in which the user equipment can receive electric wave, for the purpose of providing the user equipment with a good communication environment. If environment for propagation in each cell changes due to movement or the like of the user equipment, the user equipment needs to switch the cell in which the user equipment performs communication. Cells are switched by hard handover which brings instantaneous interruption.

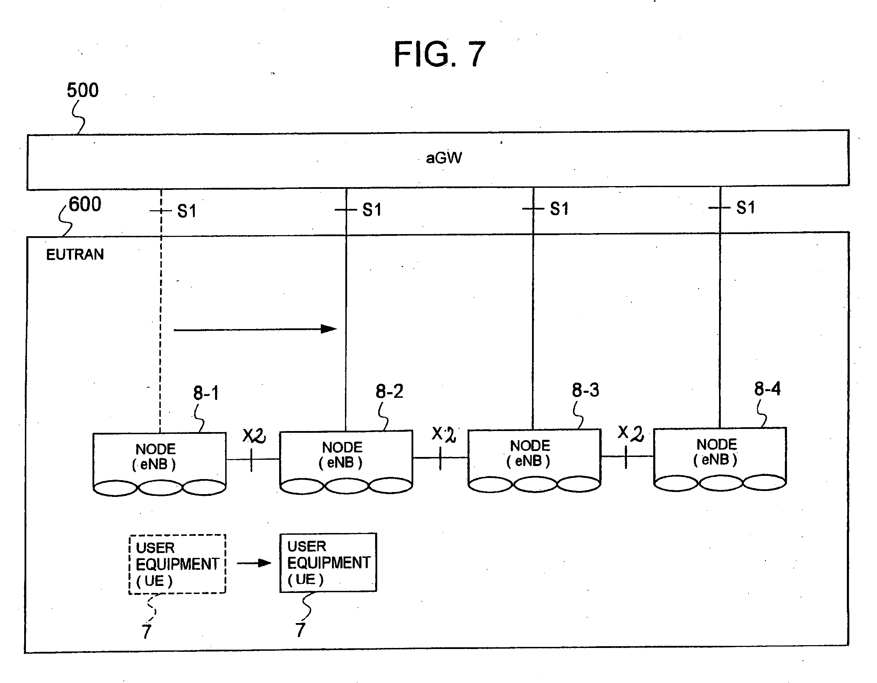

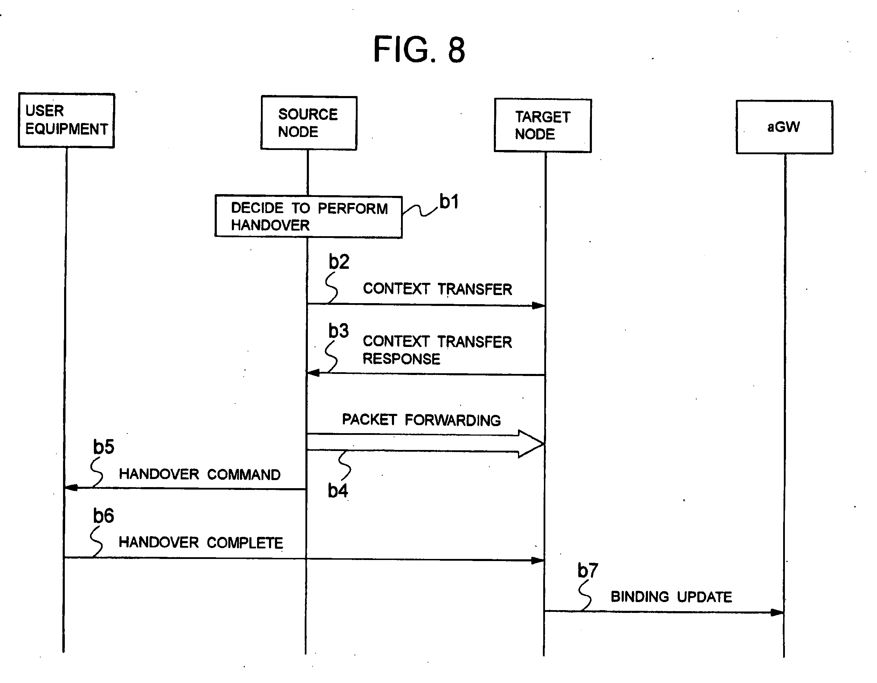

As shown in FIG. 7, when user equipment 7 moves across the cells under control of the different Nodes (eNB) 8-1, 8-2, the Nodes (eNB) 8-1, 8-2 that manages the user equipment 7 needs to be switched. Accordingly, connection between the Node (eNB) 8-1 and aGW500 also needs to be switched to that between, the Node (eNB) 8-2, to which the user equipment 7 is newly connected, and aGW500. The switching of cell described above is implemented by a procedure shown in FIG. 8.

In FIG. 8, a Source Node (eNB) is the Node (eNB) 8-1, to which the user equipment 7 has been connected before it moved, and the Target Node (eNB) is the Node (eNB) 8-2, to which the user equipment 7 is connected after it moved. The cell, to which the user equipment to be connected, is decided by the Source Node (eNB) (the procedure b1 in FIG. 8). Information required for communication with the user equipment kept in the Source Node (eNB) is transferred from the Source Node (eNB) to a Target Node (eNB) (procedures b2, b3 in FIG. 8).

Data, which has been stayed in the Source Node (eNB) and has not been sent by the user equipment, is also transferred from the Source Node (eNB) to the Target Node (eNB) (procedure b4 in FIG. 8). The user equipment is connected with the cell, which is informed of from the Source Node (eNB) for the user equipment to move to (procedure b5 in FIG. 8), and informs the Target Node (eNB) that it has been connected with a new cell (procedure b6 in FIG. 8).

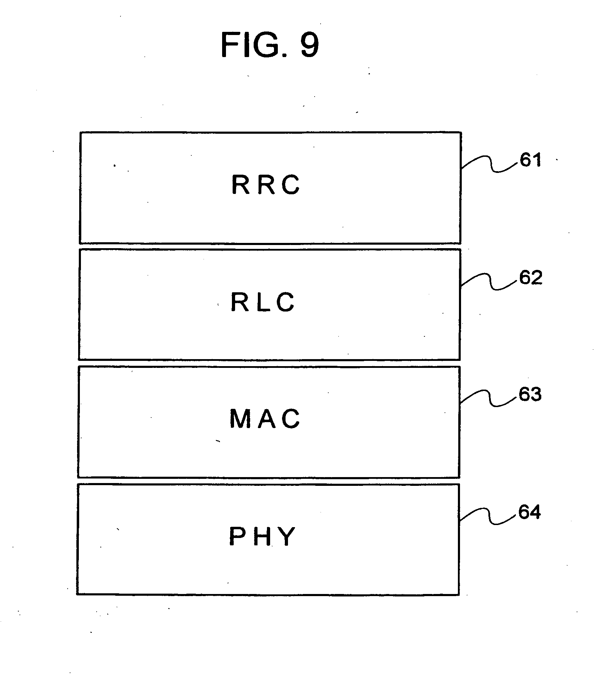

Then, the Target Node (eNB) requires the aGW to switch the connection between the Source Node (eNB) and the aGW to that between the Target Node (eNB) and the aGW (procedure b7 in FIG. 8). The processes are controlled at an RRC (Radio Resource Control) layer 61 of a protocol stack for the Node (eNB) shown in FIG. 9.

At an RLC (Radio Link Control) layer 62, ensuring arrival of data is mainly performed by re-sending control. At an MAC (Medium Access Control) layer 63, scheduling of data to be sent to a radio section is mainly performed. At a PHY (PHYsical) layer 64, signal processing such as modulation of data is performed.

The procedure b1 in FIG. 8 (decision to perform handover) is performed based on the measurement of the environment for propagation done at each cell, which is a candidate of handover reported from the user equipment. The procedure b1 is also controlled by an RRC layer 61 and Measurement Control in the RRC procedure is used. The user equipment measures the environment for propagation in the cell specified by the Node (eNB). If the measurement satisfies a criterion specified by the Node (eNB), it reports the Node (eNB) of the measurement. As a specific example of the criterion specified by the Node (eNB), that a cell with the best environment for propagation is changed from a certain cell to another cell is known.

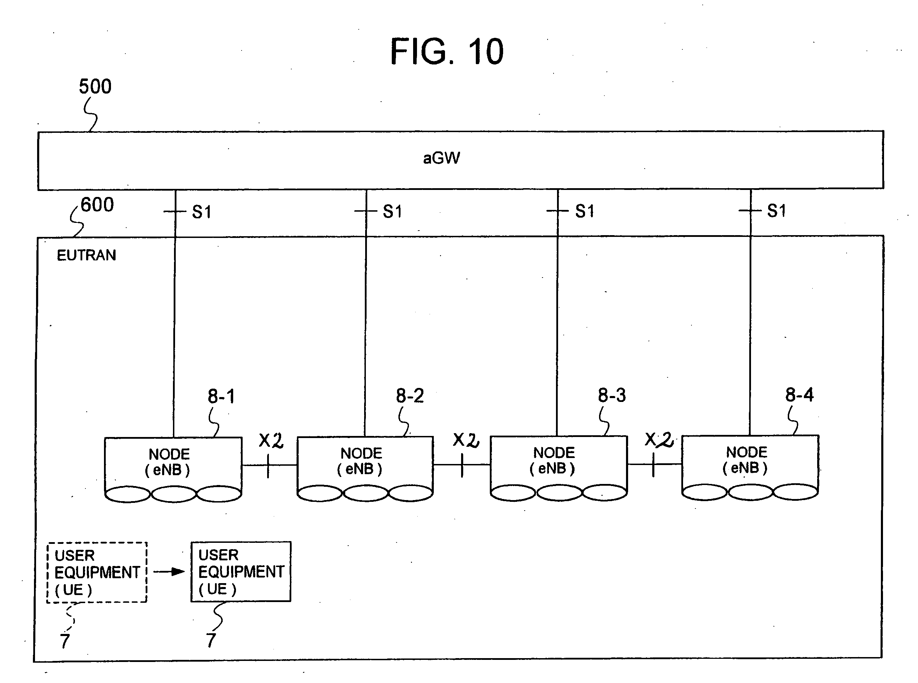

On the other hand, as shown in FIG. 10, when the user equipment 7 moves across cells under control of the same Node (eNB) 8-1, neither the Node (eNB) 8-1, which manages the user equipment 7, needs to be switched to another nor connection between the Node (eNB) 8-1 and the aGW 500 needs to be switched to another.

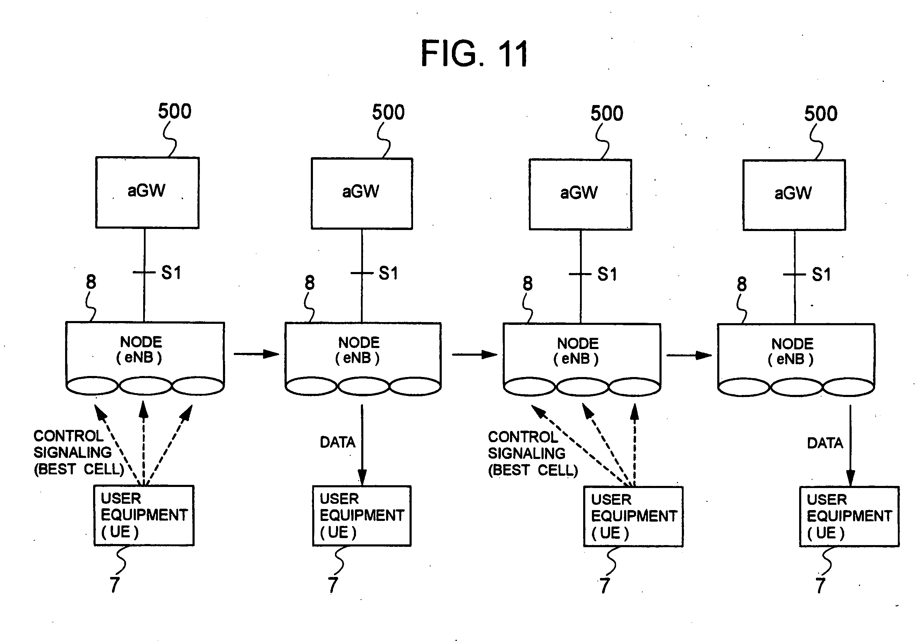

A cell, in which the user equipment 7 performs communication, can be switched to another during the movement of the user equipment 7 as described above faster than during the movement of the user equipment 7 shown in FIG. 7. The scheme called the FCS (Fast Cell Selection) has been examined for the switching (Non Patent Document 2). In the FCS, as shown in FIG. 11, the user equipment 7 regularly informs the Node (eNB) 8 of the cell with the best environment for propagation, and the Node (eNB) 8 sends data to the user equipment 7 in the cell which is informed of by the user equipment 7.

The processes can be controlled at the MAC layer 63 of a protocol stack for the Node (eNB) shown in FIG. 9. The cell, which will be subjected to the FCS, is decided at the RRC layer 61 and informed to the user equipment. After the cell, which will be subjected to the FCS, has been informed of, it no longer needs to be controlled at the RRC layer 61. As the cell is not controlled at the RRC layer 61 thereafter, a cell for performing communication can be switched quickly to another.

The user equipment may not be always placed under control of the same Node (eNB). For the purpose of taking consideration of the state where the user equipment moves across the Nodes (eNB), the Measurement Control in the RRC procedure needs to be always performed. In the case where the user equipment performs the FCS and always stays under the control of the same Node (eNB), however, the measurement of the environment for propagation of the cell needs not to be reported to the RRC layer.

If the Measurement Control in the RRC procedure and the FCS are operated independently, the user equipment reports the RRC layer of the Node (eNB) of the measurement of the environment for propagation of the cell even when the user equipment is performing the FCS and always staying under the control of the same Node (eNB). That forces the RRC layer to process the report of the unneeded measurement.

Then, the present invention intends to solve the above-mentioned problem and provide a mobile communication system, a node device, user equipment and a measurement report suppressing method used for them which can suppress unneeded reports on the measurement of the environment for propagation of a cell from the user equipment to the RRC layer of the Node (eNB).

### BRIEF SUMMARY OF THE INVENTION

This object is achieved by a mobile communication system according to claim 1, a node device according to claim 4, a user equipment according to claim 6 and a measurement report suppressing method according to claim 10; the dependent claims are related to further developments of the invention.

An exemplary aspect of embodiment of the mobile communication system of the present invention, to achieve the above-mentioned object, informs a UE (User Equipment) of a Cell for which measurement is to be reported (for which measurement is not needed to be reported) when an RRC (Radio Resource Control) layer of a Node (eNB), in which a Node B (radio base station) and an RNC (Radio Network controller: radio network control device) are integrated, performs a Measurement Control of an RRC procedure.

The user equipment avoids sending a report of unneeded measurement to the RRC layer of the Node (eNB) according to the information informed by the Node (eNB). A cell, which will be subjected to the FCS (Fast Cell Selection), is updated as the user equipment moves, and at the same time, a cell for which measurement will be reported (for which measurement needs not to be reported) is updated.

Accordingly, in the mobile communication system of the present invention, the Node (eNB) that is controlling user equipment can suppress sending of the Measurement Report, which will be a criterion for performing handover onto the user equipment, (report of the environment of propagation for a radio section sent from the user equipment to the Node (eNB)), while the user equipment is performing the FCS, so that power consumption at the user equipment and a processing load on the Node (eNB) are reduced.

More specifically, in the mobile communication system of the present invention, (1) first, a connection among user equipment, a Node (eNB) and aGW is established, and (2) when the FCS is to be performed, a cell, which will be subjected to the FCS, is set for an MAC (Medium Access Control) layer of the user equipment and the Node (eNB).

(3) The RRC layer of the Node (eNB) sends the Measurement Control to the user equipment and requests the user equipment to report the Node (eNB) of the measurement of the environment of propagation of adjacent cell which will be a basis for the Node (eNB) to determine about handover. Here, the RRC layer of the Node (eNB) takes account of a cell, which will be subjected to the FCS, and informs the user equipment of the cell, for which the measurement will be reported (for which a report on the measurement is not needed). Specifically, the cell, for which the measurement will be reported, is the other than the cell, which will be subjected to the FCS (the cell, for which the measurement needs not to be reported, is the cell, which will be subjected to the FCS).

(4) When the user equipment measures the environment of propagation, whether the measurement at the RRC layer is to be reported by taking account of information on the cell, for which the measurement will be reported, (for which a report on the measurement is not needed), in the procedure of the above-mentioned (3).

(5) When the cell with the best environment for propagation at the MAC layer is informed of, the MAC layer of the Node (eNB) sends data from the cell, which is informed from the MAC layer of the user equipment, to the user equipment.

(6) When the measurement at the RRC layer is reported, the RRC layer of the Node (eNB) determines whether or not to perform handover based on the measurement informed of from the RRC layer of the user equipment.

### BRIEF DESCRIPTION OF THE DRAWINGS

FIG. 1 is a block diagram showing a configuration of a node device according to an exemplary embodiment of the present invention;
FIG. 2 is a block diagram showing a configuration of user equipment according to an exemplary embodiment of the present invention;
FIG. 3 is a sequence chart showing operations of a mobile communication system according to an exemplary embodiment of the present invention;
FIG. 4 is a diagram showing a configuration of the related UTRAN;
FIG. 5 is a diagram showing control of user equipment via the related DRNC;
FIG. 6 is a diagram showing a configuration of the EUTRAN in which the RNC and the Node B are integrated;
FIG. 7 is a diagram showing movement of the user equipment across the Nodes (eNB);
FIG. 8 is a diagram showing a sequence chart of handover in the movement of the user equipment across the Nodes (eNB);
FIG. 9 is a diagram showing a protocol stack of the Nodes (eNB);
FIG. 10 is a diagram showing movement of the user equipment under control of the same Node (eNB); and
FIG. 11 is a diagram outlining the FCS.

### DETAILED DESCRIPTION OF EXEMPLARY EMBODIMENT

### [An Exemplary Embodiment]

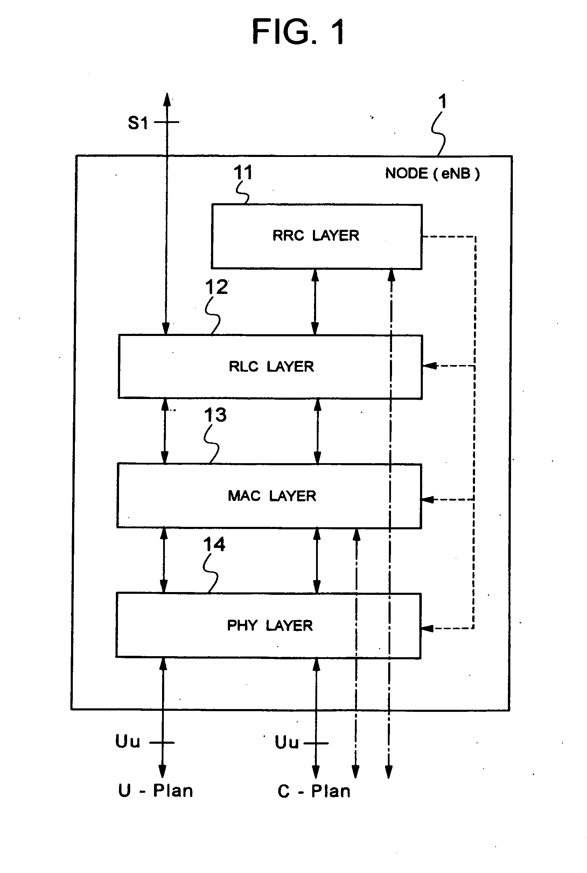

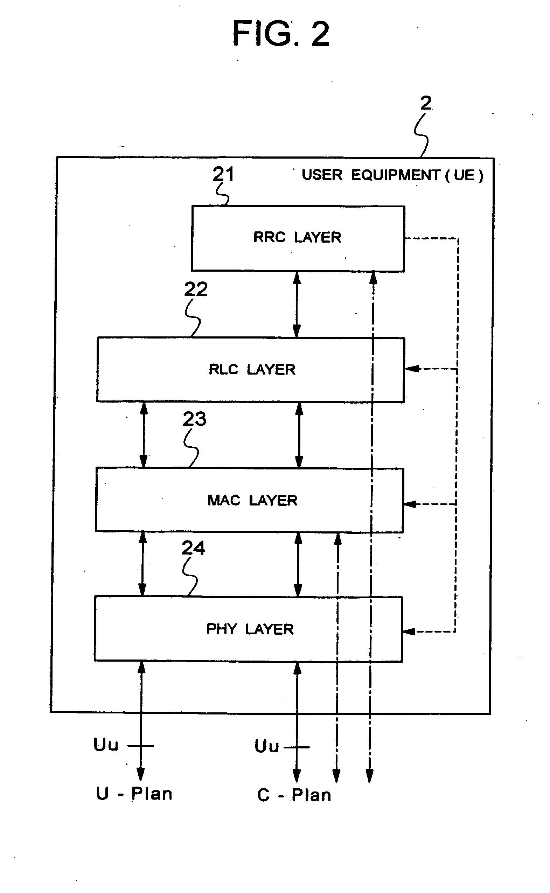

Now, an exemplary embodiment of the present invention will be described with reference to the drawings. FIG. 1 is a block diagram showing a configuration of a node device according to an exemplary embodiment of the present invention. FIG. 2 is a block diagram showing a configuration of user equipment (UE) according to an exemplary embodiment of the present invention.

In FIG. 1, a node device 1 according to an exemplary embodiment of the present invention is a Node (eNB) in which a Node B (radio base station) and the RNC (Radio Network controller: radio network controlling device) are integrated, including an RRC (Radio Resource Control) layer 11, an RLC (Radio Link Control) layer 12, an MAC (Medium Access Control) layer 13, and a PHY (PHYsical) layer 14. The layers form a protocol stack of the Node (eNB).

In FIG. 2, user equipment 2 includes an RRC layer 21, an RRC layer 22, an MAC layer 23 and a PHYlayer 24 as the above-mentioned Node device 1. The layers form a protocol stack of the user equipment 2. The reference symbol Uu indicates a radio section in FIG. 1 and FIG. 2.

The RRC layers 11, 21 at the Node device 1 and the user equipment 2 have a function of setting the RLC layers 12, 22, the MAC layers 13, 23, and the PHY layers 14, 24 and of controlling the user equipment 2. Here, the setting is mainly the setting of a path for performing communication between the Node device 1 and the user equipment 2.

The Measurement Control in the RRC procedure is generated at the RRC layer 11 of the Node device 1. The Cell, for which the measurement will be reported (for which a report of the measurement is not needed), is informed of from the RRC layer 11 to the RRC layer 21 of the user equipment 2 via the RLC layer 12, the MAC layer 13 and the PHY layer 14.

The Cell, which will be subjected to the FCS (Fast Cell Selection), is also generated at the RRC layer 11 of the Node device 1 and informed to the RRC layer 21 of the user equipment 2 as the Measurement Control is.

The RRC layer 21 of the user equipment 2 sets the cell, which will be subjected to the FCS, to the MAC layer 23 of the user equipment 2. The PHYlayer 24 of the user equipment 2 measures the environment for propagation of the adjacent cell including a cell, in which the user equipment 2 is placed. As a result of measuring the environment for propagation, if the measurement needs to be reported to the RRC layer 11 of the Node device 1, the measurement is informed from the RRC layer 21 of the user equipment 2 to the RRC layer 11 of the Node device 1, and whether or not to perform handover is determined at the RRC layer 11 of the Node device 1.

If the measurement needs not to be reported to the RRC layer 11 of the Node device 1 as a result of measuring the environment of propagation at the user equipment 2, the cell with the best environment for propagation among the cells, which will be subjected to the FCS, is informed from the MAC layer 23 of the user equipment 2 to the MAC layer 13 of the Node device 1. The MAC layer 11 of the Node device 1 sends data from a cell, which is informed from the MAC layer 23 of the user equipment 2, to the user equipment 2.

The user equipment 2 avoids sending the report of the unneeded measurement to the RRC layer 11 of the Node device 1 according to the information informed from the Node device 1. The cell, which will be subjected to the FCS, is updated as the user equipment 2 moves, and at the same time, the cell, for which the measurement will be reported, (for which the measurement needs not to be reported) is updated.

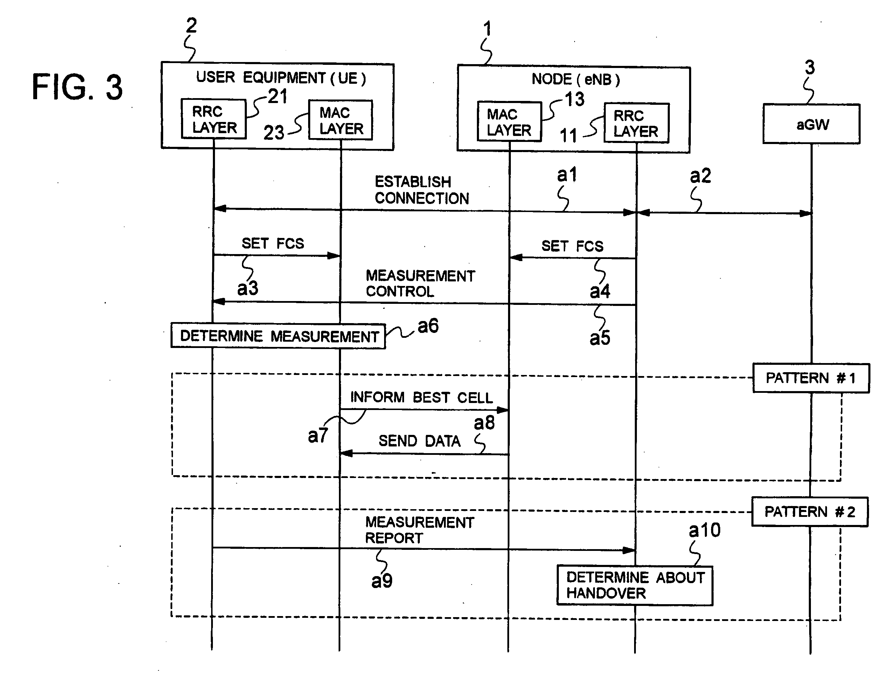

FIG. 3 is a flowchart showing operations of a mobile communication system according to an exemplary embodiment of the present invention. Operations of the mobile communication system according to an exemplary embodiment of the present invention will be described with reference to FIG. 1 to FIG. 3.

First, a connection among the user equipment 2, the Node device 1 and the aGW (access gateway) which indicates a core network is established (a1, a2 in FIG. 3). If the FCS is to be performed, the cell, which will be subjected to the FCS, is set to the MAC layers 13, 23 of the user equipment 2 and the Node device 1 (a3, a4 in FIG. 3).

The RRC layer 11 of the Node device 1 sends the Measurement Control to the user equipment 2 (a5 in FIG. 3), and the Node device 1 requests the user equipment 2 to report the measurement of the environment for propagation of the adjacent cell, which will be a criterion for the Node device 1 in determining whether or not to perform handover. Here, the RRC layer 11 of the Node device 1 informs the user equipment 2 of the cell, for which the measurement will be reported, (for which the measurement needs not to be reported) by taking account of the cell, which will be subjected to the FCS. Specifically, the cell, for which the measurement will be reported, is other than the cell, which will be subjected to the FCS, (the cell, for which the measurement needs not to be reported, is the cell, which will be subjected to the FCS).

When the user equipment 2 measures the environment for propagation, it determines whether the measurement at the RRC layer 21 is reported or not by taking account of the information on the cell, for which the measurement informed in the procedure at the RRC layer 11 of the Node device 1 will be reported (for which the measurement needs not to be reported) (a6 in FIG. 3).

When the cell with the best environment for propagation at the MAC layer is informed of (in the case of the pattern #1), the MAC layer 13 of the Node device 1 sends data from the cell that is informed from the MAC layer 23 of the user equipment 2 to the user equipment 2 (a7, a8 in FIG. 3).

When the measurement at the RRC layer is reported (in the case of the pattern #2), the RRC layer 11 of the Node device 1 determines whether or not to perform handover based on the measurement informed from the RRC layer 21 of the user equipment 2 (a9, a10 in FIG. 3).

The present invention has an advantage of being able to suppress an unneeded report of the measurement of the environment of propagation of the cell from the user equipment to the RRC layer of the Node (eNB).

As such, in an exemplary embodiment, power consumption at the user equipment 2 and a processing load at the Node device 1 can be reduced respectively as a cell, for which the measurement at the RRC layer 21 will be reported (for which the measurement needs not to be reported), is informed of from the Node device 1 to the user equipment 2 and the user equipment 2 suppresses an unneeded report of the measurement at the RRC layer 21 by taking account of the above-mentioned cell where the user equipment 2 is performing the FCS.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A mobile communication system comprising user equipment (2), and a node device (1), in which a radio base station for performing radio communication with the user equipment and a radio network control device for controlling the radio base station are integrated; wherein
the user equipment (2) comprises an environment propagation reporting means (21) for reporting the node device of the environment for propagation at a Radio Resource Control level, RRC level, only when the environment for propagation at the RRC level needs to be reported when Fast Cell Selection, FCS, is not performed where soft handover is not performed, and wherein
a connection among the user equipment, the node device (1) and an access gateway (3) is established;
the node device is adapted to send a measurement control for informing the user equipment of either one of a cell, for which the measurement of the environment for propagation at the RRC level will be reported and a cell for which the measurement of the environment for propagation at the RRC level needs not to be reported; wherein the cell for which the measurement needs not to be reported is a cell, which will be subject to the FCS where soft handover is not performed;
when FCS is to be performed, the cell, which will be subjected to the FCS is set for an MAC layer of the user equipment and the node device (1);
when the user equipment is adapted to measure the environment for propagation, the user equipment is adapted to determine whether the measurement of the environment for propagation at the RRC level needs to be reported taking into account the cell informing received through the measurement control form the node device (1);
the MAC layer of user equipment is adapted to inform the MAC layer of the node device of the best cell in case the cell is subjected of the FCS and the node device is adapted to send data from said informed cell;
the user equipment is adapted to report the measurement at the RRC level, if the cell is not subject of the FCS and the node device is adapted to determine whether or not to perform handover based on the received measurement from the RRC layer of the user equipment.

2. The mobile communication system according to claim 1, wherein the node device is adapted to update the cell, for which the environment for propagation at the RRC level will be reported, and the cell, for which the environment for propagation at the RRC level needs not to be reported, when the cell, in which the user equipment is staying is changed as the user equipment moves.

3. The mobile communication system according to claim 1, wherein the user equipment (2) is adapted to suppress a report of the environment for propagation at the RRC level to the node device (1), if the cell, in which the user equipment is staying, is the cell, for which the environment for propagation at the RRC level needs not to be reported.

4. A node device, in which a radio base station for performing radio communication with user equipment and a radio network control device for managing the radio base station are integrated, comprising:
a cell informing means for informing the user equipment of information indicating either one of a cell, for which the environment for propagation at a Radio Resource Control level, RRC level, will be reported, and a cell, for which environment for propagation at the RRC level needs not to be reported; wherein
the environment for propagation at the RRC level is reported from the user equipment (2) to the node device (1) only when the environment for propagation at the RRC level needs to be reported based on the information when Fast Cell Selection, FCS, is not performed where soft handover is not performed, wherein
a connection among the user equipment, the node device (1) and an access gateway (3) is established;
the node device is adapted to send a measurement control for informing the user equipment of either one of a cell, for which the measurement of the environment for propagation at the RRC level will be reported and a cell for which the measurement of the environment for propagation at the RRC level needs not to be reported; wherein the cell for which the measurement needs not to be reported is a cell, which will be subject to the FCS where soft handover is not performed;
when FCS is to be performed, the cell, which will be subjected to the FCS is set for an MAC layer of the user equipment and the node device (1);
the MAC layer of the node device is adapted to receive information of the MAC layer of the user equipment about the best cell in case the cell is subjected of the FCS and the node device is adapted to send data from said informed cell;
the node device is adapted to receive from the user equipment the measurement at the RRC level, if the cell is not subject of the FCS, and to determine whether or not to perform handover based on the received measurement from the RRC layer of the user equipment.

5. The node device according to claim 4, wherein the cell, for which the environment for propagation at the RRC level will be reported, and the cell, for which the environment for propagation at the RRC level needs not to be reported, are updated when the cell, in which the user equipment is staying, is changed as the user equipment moves.

6. User equipment for performing radio communication with a node device in which a radio base station and a radio network control device for managing the radio base station are integrated; comprising
an environment propagation reporting means for reporting the node device of the environment for propagation at a Radio Resource Control level, RRC level, only when the environment for propagation at the RRC level needs to be reported when Fast Cell Selection, FCS, is not performed where soft handover is not performed, wherein
a connection among the user equipment, the node device (2) and an access gateway (3) is established;
the user equipment is adapted to receive a measurement control from the node device for informing the user equipment of either one of a cell, for which the measurement of the environment for propagation at the RRC level will be reported and a cell for which the measurement of the environment for propagation at the RRC level needs not to be reported; wherein the cell for which the measurement needs not to be reported is a cell, which will be subject to the FCS where soft handover is not performed;
when FCS is to be performed, the cell, which will be subjected to the FCS is set for an MAC layer of the user equipment and the node device (1);
when the user equipment is adapted to measure the environment for propagation, the user equipment is adapted to determine whether the measurement of the environment for propagation at the RRC level needs to be reported taking into account the cell informing received through the measurement control from the node device (1);
the MAC layer of user equipment is adapted to inform the MAC layer of the node device of the best cell in case the cell is subjected of the FCS and the node device is adapted to send data from said informed cell;
the user equipment is adapted to report the measurement at the RRC level to the node device, if the cell is not subject of the FCS.

7. The user equipment according to claim 6, wherein the environment for propagation at the RRC level is reported to the node device (1) only when the environment for propagation at the RRC level needs to be reported based on the information indicating either one of a cell, for which the environment for propagation at the RRC level needs to be reported, and a cell for which environment for propagation at the RRC level needs not to be reported when the information is informed from the node device (1).

8. The user equipment according to claim 7, wherein the cell, for which the environment for propagation at the RRC level will be reported, and the cell, for which the environment for propagation at the RRC level needs not to be reported, are updated, only when the cell, in which the user equipment is staying is updated as the user equipment moves.

9. The user equipment according to claim 6, wherein a report of the environment for propagation at the RRC level to the node device (1) is suppressed, if the cell, in which the user equipment is staying, is the cell, for which the environment for propagation at the RRC level needs not to reported.

10. A measurement report suppressing method used in a mobile communication system comprising user equipment and a node device, in which a radio base station for performing radio communication with the user equipment and a radio network control device for controlling the radio base station are integrated; comprising in the user equipment
performing a process to report the node device of the environment for propagation at a Radio Resource Control level, RRC level, only when the environment for propagation at the RRC level needs to be reported when Fast Cell Selection FCS is not performed where soft handover is not performed; wherein
a connection among the user equipment, the node device (1) and an access gateway (3) is established;
the node device sends a measurement control for informing the user equipment of either one of a cell, for which the measurement of the environment for propagation at the RRC level will be reported and a cell for which the measurement of the environment for propagation at the RRC level needs not to be reported; wherein the cell for which the measurement needs not to be reported is a cell, which will be subject to the FCS where soft handover is not performed;
when FCS is to be performed, the cell, which will be subjected to the FCS is set for an MAC layer of the user equipment and the node device (1);
when the user equipment measures the environment for propagation, the user equipment determines whether the measurement of the environment for propagation at the RRC level needs to be reported taking into account the cell informing received through the measurement control form the node device (1);
the MAC layer of user equipment informs the MAC layer of the node device of the best cell in case the cell is subjected of the FCS and the node device sends data from said informed cell;
the user equipment reports the measurement at the RRC level, if the cell is not subject of the FCS and the node device determines whether or not to perform handover based on the received measurement from the RRC layer of the user equipment.

11. The measurement report suppressing method according to claim 10, wherein the node device updates the cell, for which the environment for propagation at the RRC level will be reported, and the cell, for which the environment for propagation at the RRC level needs not to be reported, when the cell, in which the user equipment is staying is changed as the user equipment moves.

12. The measurement report suppressing method according to claim 10, wherein the user equipment suppresses a report of the environment for propagation at the RRC level to the node device (1), if the cell, in which the user equipment is staying, is the cell, for which the environment for propagation at the RRC level needs not to be reported.

## Patentansprüche

1. Mobiles Kommunikationssystem, umfassend eine Benutzereinrichtung (2) und eine Knotenvorrichtung (1), in welcher eine Funkbasisstation zum Durchführen von Funkkommunikation mit der Benutzereinrichtung und eine Funknetzwerksteuervorrichtung zum Steuern/Regeln der Funkbasisstation integriert sind; wobei
die Benutzereinrichtung (2) ein Ausbreitungsumgebungsberichtsmittel (21) umfasst um der Knotenvorrichtung über die Ausbreitungsumgebung auf einer Radio Resource Control Ebene, RRC-Ebene, nur zu berichten, wenn über die Ausbreitungsumgebung auf RRC-Ebene informiert werden muss, wenn keine Fast Cell Selection FCS durchgeführt wird, wo kein Soft Handover durchgeführt wird, und wobei
eine Verbindung zwischen der Benutzereinrichtung, der Knotenvorrichtung (1) und einem Zugangsgateway (3) hergestellt ist;
die Knotenvorrichtung dazu eingerichtet ist, eine Messungsansteuerung zu senden zum Informieren der Benutzereinrichtung über eine Zelle, für welche über die Messung der Ausbreitungsumgebung auf RRC-Ebene berichtet wird, oder über ein Zelle, für welche über die Messung der Ausbreitungsumgebung auf RRC-Ebene nicht berichtet werden muss; wobei die Zelle, für welche über die Messung nicht berichtet werden muss, eine Zelle ist, die der FCS unterliegt wo kein Soft Handover durchgeführt wird;
wenn FCS durchgeführt werden muss, die Zelle, die der FCS unterliegt, für eine MAC-Ebene der Benutzereinrichtung und der Knotenvorrichtung (1) eingestellt wird;
wenn die Benutzereinrichtung dazu eingerichtet ist, die Ausbreitungsumgebung zu messen, die Benutzereinrichtung dazu eingerichtet wird, zu bestimmen, ob über die Messung der Ausbreitungsumgebung auf RRC-Ebene berichtet werden muss unter Berücksichtigung der Zelleninformation, welche mittels der Messungsansteuerung von der Knotenvorrichtung (1) erhalten wird;
die MAC-Ebene der Benutzereinrichtung dafür eingerichtet ist, die MAC-Ebene der Knotenvorrichtung über die beste Zelle zu informieren, falls die Zelle der FCS unterliegt, und die Knoteneinrichtung dazu eingerichtet ist, Daten von der mitgeteilten Zelle zu senden;
die Benutzereinrichtung dazu eingerichtet ist, über die Messung auf RRC-Ebene zu berichten, wenn die Zelle nicht der FCS unterliegt, und die Knotenvorrichtung dazu eingerichtet ist, zu bestimmen, ob ein Handover durchgeführt wird oder nicht basierend auf der empfangenen Messung von der RRC-Ebene der Benutzereinrichtung.

2. Mobiles Kommunikationssystem nach Anspruch 1, wobei die Knotenvorrichtung dazu eingerichtet ist, die Zelle zu aktualisieren, für welche über die Ausbreitungsumgebung auf RRC-Ebene berichtet wird, und die Zelle, für welche über die Ausbreitungsumgebung auf RRC-Ebene nicht berichtet werden muss, wenn die Zelle, in welcher sich die Benutzereinrichtung aufhält, verändert wird bei sich bewegender Benutzereinrichtung.

3. Mobiles Kommunikationssystem nach Anspruch 1, wobei die Benutzereinrichtung (2) dazu eingerichtet ist, einen Bericht über die Ausbreitungsumgebung auf RRC-Ebene zur Knotenvorrichtung (1) zu unterdrücken, wenn die Zelle, in welcher sich die Benutzereinrichtung aufhält, die Zelle ist, für welche über die Ausbreitungsumgebung auf RRC-Ebene nicht berichtet werden muss.

4. Knotenvorrichtung, in der eine Funkbasisstation zum Durchführen von Funkkommunikation mit einer Benutzereinrichtung und eine Funknetzwerksteuervorrichtung zum Steuern/Regeln der Funkbasisstation integriert sind, umfassend:
ein Zelleninformationsmittel zum Informieren der Benutzereinrichtung über Informationen, die entweder eine Zelle angeben, für welche über die Ausbreitungsumgebung auf einer Radio Resource Control Ebene, RRC-Ebene, berichtet wird, oder eine Zelle, für welche über die Ausbreitungsumgebung auf einer RRC-Ebene nicht berichtet werden muss; wobei
über die Ausbreitungsumgebung auf RRC-Ebene von der Benutzereinrichtung (2) zur Knotenvorrichtung (1) nur berichtet wird, wenn über die Ausbreitungsumgebung auf RRC-Ebene berichtet werden muss basierend auf der Information, wenn keine Fast Cell Selection FCS durchgeführt wird wo kein Soft Handover durchgeführt wird, wobei
eine Verbindung zwischen der Benutzereinrichtung, der Knotenvorrichtung (1) und einem Zugangsgateway (3) hergestellt ist;
die Knotenvorrichtung dazu eingerichtet ist, eine Messungsansteuerung zu senden zum Informieren der Benutzereinrichtung über eine Zelle, für welche über die Messung der Ausbreitungsumgebung auf RRC-Ebene berichtet wird,
oder über ein Zelle, für welche über die Messung der Ausbreitungsumgebung auf RRC-Ebene nicht berichtet werden muss; wobei die Zelle, für welche über die Messung nicht berichtet werden muss, eine Zelle ist, die der FCS unterliegt und wo kein Soft Handover durchgeführt wird;
wenn FCS durchgeführt werden muss, die Zelle, die der FCS unterliegt, für eine MAC-Ebene der Benutzereinrichtung und der Knotenvorrichtung (1) eingestellt wird;
die MAC-Ebene der Knotenvorrichtung dazu eingerichtet ist, Informationen der MAC-Ebene der Benutzereinrichtung über die beste Zelle zu empfangen, falls die Zelle FCS unterliegt, und die Knotenvorrichtung dazu eingerichtet ist, Daten von dieser mitgeteilten Zelle zu senden;
die Knotenvorrichtung dazu eingerichtet ist, die Messung auf RRC-Ebene von der Benutzereinrichtung zu empfangen, wenn die Zelle nicht dem FCS unterliegt, und zu bestimmen, ob ein Handover durchgeführt wird oder nicht basierend auf der von der RRC-Ebene der Benutzereinrichtung empfangenen Messung.

5. Knotenvorrichtung nach Anspruch 4, wobei die Zelle, für welche über die Ausbreitungsumgebung auf RRC-Ebene berichtet wird, und die Zelle, für welche nicht über die Ausbreitungsumgebung auf RRC-Ebene berichtet werden muss, aktualisiert werden, wenn die Zelle, in welcher sich die Benutzereinrichtung aufhält, verändert wird bei sich bewegender Benutzereinrichtung.

6. Benutzereinrichtung zum Durchführen von Funkkommunikation mit einer Knotenvorrichtung, in welcher eine Funkbasisstation und eine Funknetzwerksteuervorrichtung zum Steuern/Regeln der Funkbasisstation integriert sind, umfassend
Ausbreitungsumgebungsberichtmittel zum Berichten über die Ausbreitungsumgebung auf einer Radio Resource Control Ebene, RRC-Ebene, an den Knoten, nur wenn über die Ausbreitungsumgebung auf RRC-Ebene berichtet werden muss, wenn Fast Cell Selection FCS nicht durchgeführt wird wo kein Soft Handover durchgeführt wird, wobei
eine Verbindung zwischen der Benutzereinrichtung, der Knotenvorrichtung (2) und einem Zugangsgateway (3) hergestellt ist;
die Benutzereinrichtung dazu eingerichtet ist, eine Messungsteuerung von der Knotenvorrichtung zu erhalten, um die Benutzereinrichtung entweder über eine Zelle zu informieren, für welche über die Ausbreitungsumgebung auf der RRC-Ebene berichtet wird, oder über eine Zelle, für welche über die Ausbreitungsumgebung auf der RRC-Ebene nicht berichtet werden muss; wobei die Zelle, für welche die Messung nicht berichtet werden muss, eine Zelle ist, die FCS unterliegt wo kein Soft Handover durchgeführt wird;
wenn FCS durchgeführt werden muss, die Zelle, welche FCS unterliegt, auf eine MAC-Ebene der Benutzereinrichtung und der Knotenvorrichtung (1) eingestellt wird;
wenn die Benutzereinrichtung dazu eingerichtet ist, die Ausbreitungsumgebung zu messen, die Benutzereinrichtung dazu eingerichtet ist, zu bestimmen, ob über die Messung der Ausbreitungsumgebung auf der RRC-Ebene berichtet werden muss unter Berücksichtigung der Zelleninformation, die durch die Messungssteuerung von der Knotenvorrichtung (1) empfangen wird;
die MAC-Ebene der Benutzereinrichtung dazu eingerichtet ist, die MAC-Ebene der Knotenvorrichtung über die beste Zelle zu informieren, falls die Zelle FCS unterliegt, und die Knotenvorrichtung dazu eingerichtet ist, Daten von dieser mitgeteilten Zelle zu senden;
die Benutzereinrichtung dazu eingerichtet ist, die Messung auf der RRC-Ebene an die Knotenvorrichtung zu berichten, wenn die Zelle FCS nicht unterliegt.

7. Benutzereinrichtung nach Anspruch 6, wobei über die Ausbreitungsumgebung auf der RRC-Ebene der Knotenvorrichtung (1) nur berichtet wird, wenn über die Ausbreitungsumgebung auf der RRC-Ebene berichtet werden muss basiernd auf der Information, die entweder eine Zelle angibt, für welche über die Ausbreitungsumgebung auf der RRC-Ebene berichtet werden muss, oder eine Zelle, für welche über die Ausbreitungsumgebung auf der RRC-Ebene nicht berichtet werden muss, wenn die Information von der Knotenvorrichtung (1) mitgeteilt wird.

8. Benutzereinrichtung nach Anspruch 7, wobei die Zelle, für welche über die Ausbreitungsumgebung auf der RRC-Ebene berichtet wird, und die Zelle, für welche über die Ausbreitungsumgebung auf der RRC-Ebene nicht berichtet werden muss, nur aktualisiert werden, wenn die Zelle, in welcher sich die Benutzereinrichtung aufhält, aktualisiert wird bei sich bewegender Benutzereinrichtung.

9. Benutzereinrichtung nach Anspruch 6, wobei ein Bericht über die Ausbreitungsumgebung auf der RRC-Ebene zur Knotenvorrichtung (1) unterdrückt wird, wenn die Zelle, in welcher sich die Benutzereinrichtung aufhält, eine Zelle ist, für welche über die Ausbreitungsumgebung auf der RRC-Ebene nicht berichtet werden muss.

10. Verfahren zur Unterdrückung eines Messungsberichts, das in einem mobilen Kommunikationssystem verwendet wird, wobei das Kommunikationssystem eine Benutzereinrichtung und eine Knotenvorrichtung umfasst, in welcher eine Funkbasisstation zum Durchführen von Funkkommunikation mit der Benutzereinrichtung und eine Funknetzwerksteuervorrichtung zum Steuern/Regeln der Funkbasisstation integriert sind; wobei es in der Benutzereinrichtung umfasst Durchführen eines Prozesses um an die Knotenvorrichtung über die Ausbreitungsumgebung auf einer Radio Resource Control Ebene, RRC-Ebene zu berichten, nur wenn über die Ausbreitungsumgebung auf der RRC-Ebene berichtet werden muss, wenn Fast Cell Selection FCS nicht durchgeführt wird wo kein Soft Handover durchgeführt wird; wobei
eine Verbindung zwischen der Benutzereinrichtung, der Knotenvorrichtung (1) und einem Zugangsgateway (3) hergestellt wird;
die Knotenvorrichtung eine Messungssteuerung sendet, um die Benutzereinrichtung entweder über eine Zelle zu informieren, für welche über die Messung für die Ausbreitungsumgebung auf der RRC-Ebene berichtet wird, oder über eine Zelle, für welche über die Messung für die Ausbreitungsumgebung auf der RRC-Ebene nicht berichtet werden muss;
wobei die Zelle, für welche über die Messung berichtet werden muss, eine Zelle ist, die FCS unterliegt wo kein Soft Handover durchgeführt wird;
wenn FCS durchgeführt wird, die Zelle, die FCS unterliegt, für eine MAC-Ebene der Benutzereinrichtung und der Knotenvorrichtung (1) eingestellt wird;
wenn die Benutzereinrichtung die Ausbreitungsumgebung misst, die Benutzereinrichtung bestimmt, ob über die Messung der Ausbreitungsumgebung auf der RRC-Ebene berichtet werden muss unter Berücksichtigung der Zelleninformation, welche durch die Messungssteuerung von der Knotenvorrichtung (1) empfangen worden ist;
die MAC-Ebene der Benutzereinrichtung die MAC-Ebene der Knoteneinrichtung über die beste Zelle informiert, falls die Zelle FCS unterliegt, und die Knotenvorrichtung Daten von dieser mitgeteilten Zelle sendet;
die Benutzereinrichtung über die Messung auf RRC-Ebene berichtet, wenn die Zelle FCS nicht unterliegt, und die Knotenvorrichtung bestimmt, ob ein Handover durchgeführt wird oder nicht basierend auf der empfangenen Messung von der RRC-Ebene der Benutzereinrichtung.

11. Verfahren zur Unterdrückung eines Messungsberichts nach Anspruch 10, wobei die Knotenvorrichtung die Zelle aktualisiert, für welche über die Ausbreitungsumgebung auf er RRC-Ebene berichtet wird, und die Zelle, für welche über die Ausbreitungsumgebung auf der RRC-Ebene nicht berichtet werden muss, wenn die Zelle, in welcher sich die Benutzereinrichtung aufhält, verändert wird bei sich bewegender Benutzereinrichtung.

12. Verfahren zur Unterdrückung eines Messungsberichts nach Anspruch 10, wobei die Benutzereinrichtung einen Bericht über die Ausbreitungsumgebung auf der RRC-Ebene zur Knotenvorrichtung (1) unterdrückt, wenn die Zelle, in welcher sich die Benutzereinrichtung aufhält, diejenige Zelle ist, für welche über die Ausbreitungsumgebung auf der RRC-Ebene nicht berichtet werden muss.

## Revendications

1. Système de communication mobile comprenant un équipement utilisateur (2), et un dispositif nodal (1), dans lequel une station de base radio pour effectuer une communication radio avec l'équipement utilisateur et un dispositif de contrôle de réseau radio pour contrôler la station de base radio sont intégrés ; dans lequel
l'équipement utilisateur (2) comprend un moyen de rapport d'environnement de propagation (21) pour rapporter au dispositif nodal l'environnement pour la propagation à un niveau de contrôle de ressources radio, niveau RRC, uniquement lorsque l'environnement pour la propagation au niveau RRC a besoin d'être rapporté lorsqu'une sélection rapide de cellule, FCS, n'est pas effectuée où un transfert intercellulaire sans coupure n'est pas effectué, et dans lequel
une connexion entre l'équipement utilisateur, le dispositif nodal (1) et une passerelle d'accès (3) est établie ;
le dispositif nodal est adapté pour envoyer une mesure de contrôle pour informer l'équipement utilisateur de l'une ou l'autre d'une cellule pour laquelle la mesure de l'environnement pour la propagation au niveau RRC sera rapportée et d'une cellule pour laquelle la mesure de l'environnement pour la propagation au niveau RRC n'a pas besoin d'être rapportée ; dans lequel la cellule pour laquelle la mesure n'a pas besoin d'être rapportée est une cellule qui sera soumise à la FCS où un transfert intercellulaire sans coupure n'est pas effectué ;
lorsque la FCS doit être effectuée, la cellule qui sera soumise à la FCS est établie pour une couche MAC de l'équipement utilisateur et du dispositif nodal (1) ;
lorsque l'équipement utilisateur est adapté pour mesurer l'environnement pour la propagation, l'équipement utilisateur est adapté pour déterminer si la mesure de l'environnement pour la propagation au niveau RRC a besoin d'être rapportée en prenant en compte la cellule informant reçue par l'intermédiaire de la mesure de contrôle en provenance du dispositif nodal (1) ;
la couche MAC de l'équipement utilisateur est adaptée pour informer la couche MAC du dispositif nodal de la meilleure cellule dans le cas où la cellule est soumise à la FCS et le dispositif nodal est adapté pour envoyer des données de ladite cellule informée ;
l'équipement utilisateur est adapté pour rapporter la mesure au niveau RRC, si la cellule n'est pas soumise à la FCS, et le dispositif nodal est adapté pour déterminer si effectuer ou non un transfert intercellulaire sur la base de la mesure reçue en provenance de la couche RRC de l'équipement utilisateur.

2. Système de communication mobile selon la revendication 1, dans lequel le dispositif nodal est adapté pour mettre à jour la cellule pour laquelle l'environnement pour la propagation au niveau RRC sera rapporté, et la cellule pour laquelle l'environnement pour la propagation au niveau RRC n'a pas besoin d'être rapporté, lorsque la cellule dans laquelle se trouve l'équipement utilisateur est changée à mesure que l'équipement utilisateur bouge.

3. Système de communication mobile selon la revendication 1, dans lequel l'équipement utilisateur (2) est adapté pour supprimer un rapport de l'environnement pour la propagation au niveau RRC pour le dispositif nodal (1), si la cellule dans laquelle se trouve l'équipement utilisateur est la cellule pour laquelle l'environnement pour la propagation au niveau RRC n'a pas besoin d'être rapporté.

4. Dispositif nodal, dans lequel une station de base radio pour effectuer une communication radio avec un équipement utilisateur et un dispositif de contrôle de réseau radio pour gérer la station de base radio sont intégrés, comprenant :
un moyen d'information de cellule pour informer l'équipement utilisateur d'une information indiquant l'une ou l'autre d'une cellule pour laquelle l'environnement pour la propagation à un niveau de contrôle de ressources radio, niveau RRC, sera rapporté et d'une cellule pour laquelle l'environnement pour la propagation au niveau RRC n'a pas besoin d'être rapporté ; dans lequel
l'environnement pour la propagation au niveau RRC est rapporté de l'équipement utilisateur (2) au dispositif nodal (1) uniquement lorsque l'environnement pour la propagation au niveau RRC a besoin d'être rapporté sur la base de l'information lorsqu'une sélection rapide de cellule, FCS, n'est pas effectuée où un transfert intercellulaire sans coupure n'est pas effectué, dans lequel
une connexion entre l'équipement utilisateur, le dispositif nodal (1) et une passerelle d'accès (3) est établie ;
le dispositif nodal est adapté pour envoyer une mesure de contrôle pour informer l'équipement utilisateur de l'une ou l'autre d'une cellule pour laquelle la mesure de l'environnement pour la propagation au niveau RRC sera rapportée et d'une cellule pour laquelle la mesure de l'environnement pour la propagation au niveau RRC n'a pas besoin d'être rapportée ; dans lequel la cellule pour laquelle la mesure n'a pas besoin d'être rapportée est une cellule qui sera soumise à la FCS où un transfert intercellulaire sans coupure n'est pas effectué ;
lorsque la FCS doit être effectuée, la cellule qui sera soumise à la FCS est établie pour une couche MAC de l'équipement utilisateur et du dispositif nodal (1) ;
la couche MAC du dispositif nodal est adaptée pour recevoir des informations de la couche MAC de l'équipement utilisateur concernant la meilleure cellule dans le cas où la cellule est soumise à la FCS et le dispositif nodal est adapté pour envoyer des données de ladite cellule informée ;
le dispositif nodal est adapté recevoir en provenance de l'équipement utilisateur la mesure au niveau RRC, si la cellule n'est pas soumise à la FCS, et pour déterminer si effectuer ou non un transfert intercellulaire sur la base de la mesure reçue en provenance de la couche RRC de l'équipement utilisateur.

5. Dispositif nodal selon la revendication 4, dans lequel la cellule pour laquelle l'environnement pour la propagation au niveau RRC sera rapporté et la cellule pour laquelle l'environnement pour la propagation au niveau RRC n'a pas besoin d'être rapporté sont mises à jour lorsque la cellule dans laquelle se trouve l'équipement utilisateur est changée à mesure que l'équipement utilisateur bouge.

6. Equipement utilisateur pour effectuer une communication radio avec un dispositif nodal dans lequel une station de base radio et un dispositif de contrôle de réseau radio pour gérer la station de base radio sont intégrés ; comprenant
un moyen de rapport d'environnement de propagation pour rapporter au dispositif nodal l'environnement pour la propagation à un niveau de contrôle de ressources radio, niveau RRC, uniquement lorsque l'environnement pour la propagation au niveau RRC a besoin d'être rapporté lorsqu'une sélection rapide de cellule, FCS, n'est pas effectuée où un transfert intercellulaire sans coupure n'est pas effectué, dans lequel
une connexion entre l'équipement utilisateur, le dispositif nodal (1) et une passerelle d'accès (3) est établie ;
l'équipement utilisateur est adapté pour recevoir une mesure de contrôle en provenance du dispositif nodal pour informer l'équipement utilisateur de l'une ou l'autre d'une cellule pour laquelle la mesure de l'environnement pour la propagation au niveau RRC sera rapportée et d'une cellule pour laquelle la mesure de l'environnement pour la propagation au niveau RRC n'a pas besoin d'être rapportée ; dans lequel la cellule pour laquelle la mesure n'a pas besoin d'être rapportée est une cellule qui sera soumise à la FCS où un transfert intercellulaire sans coupure n'est pas effectué ;
lorsque la FCS doit être effectuée, la cellule qui sera soumise à la FCS est établie pour une couche MAC de l'équipement utilisateur et du dispositif nodal (1) ;
lorsque l'équipement utilisateur est adapté pour mesurer l'environnement pour la propagation, l'équipement utilisateur est adapté pour déterminer si la mesure de l'environnement pour la propagation au niveau RRC a besoin d'être rapportée en prenant en compte la cellule informant reçue par l'intermédiaire du contrôle de mesure en provenance du dispositif nodal (1) ;
la couche MAC de l'équipement utilisateur est adaptée pour informer la couche MAC du dispositif nodal de la meilleure cellule dans le cas où la cellule est soumise à la FCS et le dispositif nodal est adapté pour envoyer des données de ladite cellule informée ;
l'équipement utilisateur est adapté pour rapporter la mesure au niveau RRC au dispositif nodal, si la cellule n'est pas soumise à la FCS.

7. Equipement utilisateur selon la revendication 6, dans lequel l'environnement pour la propagation au niveau RRC est rapporté au dispositif nodal (1) uniquement lorsque l'environnement pour la propagation au niveau RRC a besoin d'être rapporté sur la base de l'information indiquant l'une ou l'autre d'une cellule pour laquelle l'environnement pour la propagation au niveau RRC a besoin d'être rapporté et d'une cellule pour laquelle l'environnement pour la propagation au niveau RRC n'a pas besoin d'être rapporté lorsque l'information est informée depuis le dispositif nodal (1).

8. Equipement utilisateur selon la revendication 7, dans lequel la cellule pour laquelle l'environnement pour la propagation au niveau RRC sera rapporté et la cellule pour laquelle l'environnement pour la propagation au niveau RRC n'a pas besoin d'être rapporté sont mises à jour uniquement lorsque la cellule dans laquelle se trouve l'équipement utilisateur est mise à jour à mesure que l'équipement utilisateur bouge.

9. Equipement utilisateur selon la revendication 6, dans lequel un rapport de l'environnement pour la propagation au niveau RRC pour le dispositif nodal (1) est supprimé si la cellule dans laquelle se trouve l'équipement utilisateur est la cellule pour laquelle l'environnement pour la propagation au niveau RRC n'a pas besoin d'être rapporté.

10. Procédé de suppression de rapport de mesure utilisé dans un système de communication mobile comprenant un équipement utilisateur et un dispositif nodal, dans lequel une station de base radio pour effectuer une communication radio avec l'équipement utilisateur et un dispositif de contrôle de réseau radio pour contrôler la station de base radio sont intégrés ; comprenant dans l'équipement utilisateur
exécuter un processus pour rapporter au dispositif nodal l'environnement pour la propagation à un niveau de contrôle de ressources radio, niveau RRC, uniquement lorsque l'environnement pour la propagation au niveau RRC a besoin d'être rapporté lorsqu'une sélection rapide de cellule, FCS, n'est pas effectuée où un transfert intercellulaire sans coupure n'est pas effectué ; dans lequel
une connexion entre l'équipement utilisateur, le dispositif nodal (1) et une passerelle d'accès (3) est établie ;
le dispositif nodal envoie un contrôle de mesure pour informer l'équipement utilisateur de l'une ou l'autre d'une cellule pour laquelle la mesure de l'environnement pour la propagation au niveau RRC sera rapportée et d'une cellule pour laquelle la mesure de l'environnement pour la propagation au niveau RRC n'a pas besoin d'être rapportée ; dans lequel la cellule pour laquelle la mesure n'a pas besoin d'être rapportée est une cellule qui sera soumise à la FCS où un transfert intercellulaire sans coupure n'est pas effectué ;
lorsque la FCS doit être effectuée, la cellule qui sera soumise à la FCS est établie pour une couche MAC de l'équipement utilisateur et du dispositif nodal (1) ;
lorsque l'équipement utilisateur mesure l'environnement pour la propagation, l'équipement utilisateur détermine si la mesure de l'environnement pour la propagation au niveau RRC a besoin d'être rapportée en prenant en compte la cellule informant reçue par l'intermédiaire du contrôle de mesure en provenance du dispositif nodal (1) ;
la couche MAC de l'équipement utilisateur informe la couche MAC du dispositif nodal de la meilleure cellule dans le cas où la cellule est soumise à la FCS et le dispositif nodal envoie des données de ladite cellule informée ;
l'équipement utilisateur rapporte la mesure au niveau RRC, si la cellule n'est pas soumise à la FCS et le dispositif nodal détermine si effectuer ou non un transfert intercellulaire sur la base de la mesure reçue en provenance de la couche RRC de l'équipement utilisateur.

11. Procédé de suppression de rapport de mesure selon la revendication 10, dans lequel le dispositif nodal met à jour la cellule pour laquelle l'environnement pour la propagation au niveau RRC sera rapporté, et la cellule pour laquelle l'environnement pour la propagation au niveau RRC n'a pas besoin d'être rapporté, lorsque la cellule dans laquelle se trouve l'équipement utilisateur est changée à mesure que l'équipement utilisateur bouge.

12. Procédé de suppression de rapport de mesure selon la revendication 10, dans lequel l'équipement utilisateur supprime un rapport de l'environnement pour la propagation au niveau RRC pour le dispositif nodal (1), si la cellule dans laquelle se trouve l'équipement utilisateur est la cellule pour laquelle l'environnement pour la propagation au niveau RRC n'a pas besoin d'être rapporté.
